(19) Europäisches Patentamt
European Patent Office
Office européen des brevets

(11) EP 3 638 714 B1

# (12) EUROPEAN PATENT SPECIFICATION

(45) Date of publication and mention of the grant of the patent:
**24.04.2024 Bulletin 2024/17**

(21) Application number: **18729987.0**

(22) Date of filing: **13.06.2018**

(51) International Patent Classification (IPC):
***C08G 69/14*** *(2006.01)* ***C08G 69/26*** *(2006.01)*
***B29C 64/00*** *(2017.01)* ***B33Y 10/00*** *(2015.01)*
***B33Y 70/00*** *(2020.01)* *B29C 64/153 (2017.01)*
*B33Y 70/10 (2020.01)*

(52) Cooperative Patent Classification (CPC):
**C08G 69/14; B33Y 10/00; B33Y 70/00;**
**C08G 69/26;** B29C 64/153; B33Y 70/10

(86) International application number:
**PCT/EP2018/065657**

(87) International publication number:
**WO 2018/229127 (20.12.2018 Gazette 2018/51)**

## (54) COPOLYAMIDES OBTAINABLE FROM 3-(AMINOMETHYL)BENZOIC ACID

COPOLYAMIDE AUS 3-(AMINOMETHYL)BENZOESÄURE

COPOLYAMIDES POUVANT ÊTRE OBTENUS À PARTIR D'ACIDE BENZOÏQUE 3-(AMINOMÉTHYL)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.06.2017 US 201762519474 P**
**29.08.2017 EP 17188340**

(43) Date of publication of application:
**22.04.2020 Bulletin 2020/17**

(73) Proprietor: **Solvay Specialty Polymers USA, LLC**
**Alpharetta, Georgia 30005-3914 (US)**

(72) Inventors:
- **JEOL, Stéphane**
**Cumming**
**GA 30041 (US)**
- **SINGLETARY, Nancy, J.**
**Alpharetta**
**GA 30004 (US)**

(74) Representative: **Kraus & Lederer PartGmbB**
**Thomas-Wimmer-Ring 15**
**80539 München (DE)**

(56) References cited:
**JP-A- H0 967 517** **JP-A- 2003 175 543**
**US-A- 3 438 948**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 638 714 B1

**Description**

Technical Field

The present invention relates to copolyamides comprising at least 50 mol. % of 3-(aminomethyl)benzoic acid (3-AMBa). The present invention also relates to polymer compositions comprising such copolyamides, as well as articles comprising the same and methods of using said articles in automotive applications, LED packaging, electric and electronics devices, mobile electronics, gas barrier packaging, plumbing and oil and gas applications.

Background Art

In the polymer industry, attention is nowadays being paid to reduce the environmental footprint. One way to proceed is to identify biologic sources and define processes for converting these materials into valuable monomers, which are then converted into bio-based polymers.
While most polyamides are based on fossil resources, some bio-based polyamides are known and commercially available. Reference can notably be made to polyamide 11 (PA 11), produced by polymerization of 11-aminoundecanoic acid, derived from castor oil; polyamide 1010 (PA 1010), produced by polymerization of decamethylene diamine and sebacid acid, both derived from castor oil; polyamide 10T (PA 10T), produced by polymerization of decamethylene diamine and terephthalic acid (fossil based) and thus partly based on renewable raw monomers.
Most of the commercially available biobased polyamides have a low glass transition temperature (Tg) which make them unsuitable in applications requiring a high temperature resistance. PA11, commercially available under the trade name Rislan® (Arkema) has a Tg around 45°C. All of the bio-based polyamides commercially available under the trade name Vestamid® (Evonik), for example Vestamid® Terra DS (PA1010), have a Tg lower than 50°C.
As described in co-pending patent application filed under number PCT/CN2016/108997 on December 8, 2016, 3-(aminomethyl)benzoic acid (3-AMBa) is a monomer which can be derived from furfural, obtained from from biomass carbohydrates, such as cellulose, starch, hemicellulose, sugars and the like.
The applicant has identified that polyamides derived from this bio-sourced monomer present a high Tg temperature, which make them very-well suited for applications requiring a high temperature resistance, as for example for automotive applications.
JP H09 67517 A relates to heat resistant polyamides used in automotive and electronics industry, which may comprise para-aminomethyl benzoic acid. US 3 438 948 A relates to heat resistant copolymers of 3-(aminomethyl)benzoic acid and 4-(aminomethyl)benzoic acid. JP 2003 175543 A relates to copolymers comprising 3-(aminomethyl)-benzoic acid in an amount of 1 to 30 mol%.

Disclosure of the invention

The copolyamide of the present invention has the following formula (I) :

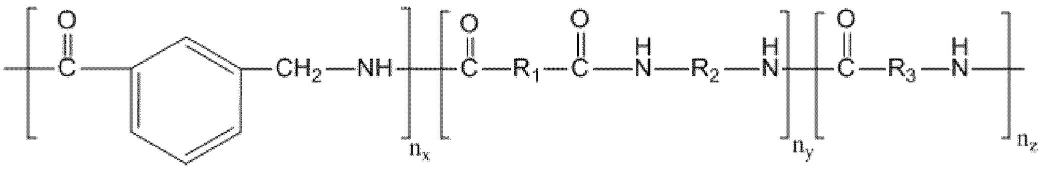
(I)

wherein :

- $n_x$, $n_y$ and $n_z$ are respectively the moles % of each recurring units x, y and z;
- recurring units x, y and z are arranged in blocks, in alternation or randomly;

$$n_x + n_y + n_z = 100;$$

$$50 \leq n_x < 100;$$

$R_1$ is selected from the group consisting of a bond, a $C_1$-$C_{15}$ alkyl and a $C_6$-$C_{30}$ aryl, optionally comprising one or more heteroatoms (e.g. O, N or S) and optionally substituted with one or more substituents selected from the group

consisting of halogen (e.g. fluorine, chlorine, bromine or iodine), hydroxy (-OH), sulfo ($-SO_3M$) (e.g. wherein M is H, Na, K, Li, Ag, Zn, Mg or Ca), $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl;

$R_2$ is selected from the group consisting of a $C_1$-$C_{20}$ alkyl and a $C_6$-$C_{30}$ aryl, optionally comprising one or more heteroatoms (e.g. O, N or S) and optionally substituted with one or more substituents selected from the group consisting of halogen (e.g. fluorine, chlorine, bromine or iodine), hydroxy (-OH), sulfo ($-SO_3M$) (e.g. wherein M is H, Na, K, Li, Ag, Zn, Mg or Ca), $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl; and

$R_3$ is selected from the group consisting of a linear or branched $C_2$-$C_{14}$ alkyl, optionally comprising one or more heteroatoms (e.g. O, N and S) and optionally substituted with one or more substituents selected from the group consisting of halogen (e.g. fluorine, chlorine, bromine and iodine), hydroxy (-OH), sulfo ($-SO_3M$) (e.g. wherein M is H, Na, K, Li, Ag, Zn, Mg or Ca), $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl.

The expression "copolyamide" is hereby used for designating copolyamides comprising 50 mol. % or more of recurring units x, for example derived from 3-(aminomethyl)benzoic acid (3-AMBa). The copolyamide of the present invention may for example comprise at least 50 mol. % of recurring units x, for example derived from 3-(aminomethyl)benzoic acid (3-AMBa), for example at least 55 mol. %, at least 60 mol. %, at least 65 mol. %, at least 70 mol. %, at least 75 mol. %, at least 80 mol. %, at least 85 mol. %, at least 90 mol. %, at least 95 mol. % or at least 98 mol. %.

The copolyamides of the present invention may have a number average molecular weight Mn ranging from 1,000 g/mol to 40,000 g/mol, for example from 2,000 g/mol to 35,000 g/mol or from 4,000 to 30,000 g/mol. The number average molecular weight Mn can be determined by gel permeation chromatography (GPC) using ASTM D5296 with polystyrene standards.

In the copolyamide of the present invention, the recurring unit y may be aliphatic or aromatic. For the purpose of the present invention, the expression "aromatic recurring unit" is intended to denote any recurring unit that comprises at least one aromatic group. The aromatic recurring units may be formed by the polycondensation of at least one aromatic dicarboxylic acid with an aliphatic diamine or by the polycondensation of at least one aliphatic dicarboxylic acid with an aromatic diamine, or by the polycondensation of aromatic aminocarboxylic acids. For the purpose of the present invention, a dicarboxylic acid or a diamine is considered as "aromatic" when it comprises one or more than one aromatic group.

In the copolyamide of the present invention, the recurring unit z is aliphatic and $R_3$ is a linear or branched $C_2$-$C_{14}$ alkyl, optionally comprising one or more heteroatoms (e.g. O, N and S) and optionally substituted with one or more substituents selected from the group consisting of halogen, hydroxy, sulfo, $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl.

The copolyamide of the present invention may be composed of recurring units x and y, or of recurring units x and z, or of recurring units x, y and z. Recurring units x, y and z are arranged in blocks, in alternation or randomly.

In the present application :

- any description, even though described in relation to a specific embodiment, is applicable to and interchangeable with other embodiments of the present disclosure;
- where an element or component is said to be included in and/or selected from a list of recited elements or components, it should be understood that in related embodiments explicitly contemplated here, the element or component can also be any one of the individual recited elements or components, or can also be selected from a group consisting of any two or more of the explicitly listed elements or components; any element or component recited in a list of elements or components may be omitted from such list; and
- any recitation herein of numerical ranges by endpoints includes all numbers subsumed within the recited ranges as well as the endpoints of the range and equivalents.

Throughout this document, all temperatures are given in degrees Celsius (°C).

Unless specifically limited otherwise, the term "alkyl", as well as derivative terms such as "alkoxy", "acyl" and "alkylthio", as used herein, include within their scope straight chain, branched chain and cyclic moieties. Examples of alkyl groups are methyl, ethyl, 1-methylethyl, propyl, 1,1-dimethylethyl, and cyclo-propyl. Unless specifically stated otherwise, each alkyl and aryl group may be unsubstituted or substituted with one or more substituents selected from but not limited to halogen, hydroxy, sulfo, $C_1$-$C_6$ alkoxy,$C_1$-$C_6$ alkylthio, $C_1$-$C_6$ acyl, formyl, cyano, $C_6$-$C_{15}$ aryloxy or $C_6$-$C_{15}$ aryl, provided that the substituents are sterically compatible and the rules of chemical bonding and strain energy are satisfied. The term "halogen" or "halo" includes fluorine, chlorine, bromine and iodine, with fluorine being preferred.

The term "aryl" refers to a phenyl, indanyl or naphthyl group. The aryl group may comprise one or more alkyl groups, and are called sometimes in this case "alkylaryl"; for example may be composed of a cycloaromatic group and two $C_1$-$C_6$ groups (e.g. methyl or ethyl). The aryl group may also comprise one or more heteroatoms, e.g. N, O or S,

and are called sometimes in this case "heteroaryl" group; these heteroaromatic rings may be fused to other aromatic systems. Such heteroaromatic rings include, but are not limited to furanyl, thienyl, pyrrolyl, pyrazolyl, imidazolyl, triazolyl, isoxazolyl, oxazolyl, thiazolyl, isothiazolyl, pyridyl, pyridazyl, pyrimidyl, pyrazinyl and triazinyl ring structures. The aryl or heteroaryl substituents may be unsubstituted or substituted with one or more substituents selected from but not limited to halogen, hydroxy, $C_1$-$C_6$ alkoxy, sulfo, $C_1$-$C_6$ alkylthio, $C_1$-$C_6$ acyl, formyl, cyano, $C_6$-$C_{15}$ aryloxy or $C_6$-$C_{15}$ aryl, provided that the substituents are sterically compatible and the rules of chemical bonding and strain energy are satisfied.

As described in co-pending patent application filed under number PCT/CN2016/108997 on December 8, 2016, 3-(aminomethyl)benzoic acid (3-AMBa) is a monomer which can be derived from furfural, obtained from biomass carbohydrates, such as cellulose, starch, hemicellulose, sugars and the like. Copolyamides derived from this bio-sourced monomer, copolymerized with at least one co-monomer (e.g. aminoacid and/or lactam) and/or a diacid/diamine combination, present a high Tg temperature, for example above 100°C, which make them very-well suited for applications requiring a high temperature resistance.

According to an embodiment, the copolyamide of the present invention is condensation product of a mixture comprising at least 50 mol. % of 3-(aminomethyl)benzoic acid (3-AMBa) monomers or derivative thereof, and at least one of the components selected from the group consisting of:

- at least one dicarboxylic acid component (also called hereby diacid) or derivative thereof, and at least one diamine component,
- at least one aminocarboxylic acid, and
- at least one lactam.

The expression "at least" is hereby intended to denote "equals to or more than". For example, the expression "at least 50 mol. % of 3-AMBa monomers" hereby denotes that the copolyamide may comprise 50 mol. % of 3-AMBa monomers or more than 50 mol. % of 3-AMBa monomers. The expression "at least" therefore corresponds to the mathematical symbol "≥" in the context of the present invention.

The expression "less than" corresponds to the mathematical symbol "<" in the context of the present invention. For example, the expression "less than 100 mol. % of 3-AMBa monomers" hereby denotes that the copolyamide comprises strictly less than 100 mol. % of 3-AMBa monomers and therefore qualify as a copolyamide, made from 3-AMBa monomers and at least one another monomer or diamine/diacid combination.

The expression "derivative thereof' when used in combination with the expression "3-AMBa monomer" is intended to denote whichever derivative which is susceptible of reacting in polycondensation conditions to yield an amide bond. Examples of amide-forming derivatives include acyl groups, for example aliphatic acyl and aromatic acyl groups, substituted or unsubstituted. Examples of these acyl groups are formyl, acetyl, propionyl, butyryl, isobutyryl, valeryl, isovaleryl, pivaloyl, benzoyl, toluoyl and xyloyl.

According to this embodiment, the dicarboxylic acid component can be chosen among a large variety of aliphatic or aromatic components comprising at least two acidic moieties -COOH. According to this embodiment, the diamine component can be chosen among a large variety of aliphatic or aromatic components comprising at least two amine moieties $-NH_2$.

The expression "derivative thereof' when used in combination with the expression "dicarboxylic acid" is intended to denote whichever derivative which is susceptible of reacting in polycondensation conditions to yield an amide bond. Examples of amide-forming derivatives include a mono- or di-alkyl ester, such as a mono- or di-methyl, ethyl or propyl ester, of such carboxylic acid; a mono- or di-aryl ester thereof; a mono- or di-acid halide thereof; a carboxylic anhydride thereof and a mono-or di-acid amide thereof, a mono- or di-carboxylate salt.

Non limitative examples of aliphatic diacarboxylic acids are notably oxalic acid (HOOC-COOH), malonic acid ($HOOC-CH_2-COOH$), succinic acid [$HOOC-(CH_2)_2-COOH$], glutaric acid [$HOOC-(CH_2)_3-COOH$], 2,2-dimethyl-glutaric acid [$HOOC-C(CH_3)_2-(CH_2)_2-COOH$], adipic acid [$HOOC-(CH_2)_4-COOH$], 2,4,4-trimethyl-adipic acid [$HOOC-CH(CH_3)-CH_2-C(CH_3)_2-CH_2-COOH$], pimelic acid [$HOOC-(CH_2)_5-COOH$], suberic acid [$HOOC-(CH_2)_6-COOH$], azelaic acid [$HOOC-(CH_2)_7-COOH$], sebacic acid [$HOOC-(CH_2)_8-COOH$], undecanedioic acid [$HOOC-(CH_2)_9-COOH$], dodecandioic acid [$HOOC-(CH_2)_{10}-COOH$], tridecanedioic acid [$HOOC-(CH_2)_{11}-COOH$], tetradecanedioic acid [$HOOC-(CH_2)_{12}-COOH$], pentadecanedioic acid [$HOOC-(CH_2)_{13}-COOH$], hexadecanedioic acid [$HOOC-(CH_2)_{14}-COOH$], octadecanedioic acid [$HOOC-(CH_2)_{16}-COOH$]. Included in this category are also cycloalphatic dicarboxylic acid such as 1,4-cyclohexane dicarboxylic acid.

Non limitative examples of aromatic diacids are notably phthalic acids, including isophthalic acid (IPA), terephthalic acid (TPA), naphthalendicarboxylic acids (e.g. naphthalene-2,6-dicarboxylic acid), 4,4'-bibenzoic acid, 2,5-pyridinedicarboxylic acid, 2,4-pyridinedicarboxylic acid, 3,5-pyridinedicarboxylic acid, 2,2-bis(4-carboxyphenyl)propane, bis(4-carboxyphenyl)methane, 2,2-bis(4-carboxyphenyl)hexafluoropropane, 2,2-bis(4-carboxyphenyl)ketone, 4,4'-bis(4-carboxyphenyl)sulfone, 2,2-bis(3-carboxyphenyl)propane, bis(3-carboxyphenyl)methane, 2,2-bis(3-carboxyphenyl)hexafluoropropane, 2,2-bis(3-carboxyphenyl)ketone, bis(3-carboxyphenoxy)benzene.

Non limitative examples of aromatic diamines ($NN_{ar}$) are notably *m*-phenylene diamine (MPD), *p*-phenylene diamine (PPD), 3,4'-diaminodiphenyl ether (3,4'-ODA), 4,4'-diaminodiphenyl ether (4,4'-ODA), *p*-xylylene diamine (PXDA) and *m*-xylylenediamine (MXDA).

Non limitative examples of aliphatic diamines ($NN_{al}$) are notably 1,2-diaminoethane, 1,2-diaminopropane, propylene-1,3-diamine, 1,3-diaminobutane, 1,4-diaminobutane (putrescine), 1,5-diaminopentane (cadaverine), 2-methyl-1,5-diaminopentane, hexamethylenediamine (or 1 ,6-diaminohexane), 3-methylhexamethylenediamine, 2,5-dimethylhexamethylenediamine, 2,2,4-trimethyl-hexamethylenediamine, 2,4,4-trimethyl-hexamethylenediamine, 1,7-diaminoheptane, 1,8-diaminooctane, 2,2,7,7-tetramethyloctamethylenediamine, 1,9-diaminononane, 2-methyl-1,8-diaminooctane, 5-methyl-1,9-diaminononane, 1,10-diaminodecane, 1,11-diaminoundecane, 1,12 diaminododecane, 1,13 diaminotridecane, 2,5-diamonotetrahydrofurane and N,N-Bis(3-aminopropyl)methylamine. Included in this category are also cycloaliphatic diamine such as isophorone diamine, 1,3-diaminocyclohexane, 1,4-diaminocyclohexane, bis-p-aminocyclohexylmethane, 1,3-bis(aminomethyl)cyclohexane and 1,4-bis(aminomethyl)cyclohexane.

The aliphatic diamines (NNal) can also be selected in the group of polyetherdiamines. The polyetherdiamines can be based on an ethoxylated (EO) backbone and/or on a propoxylated (PO) backbone and they can be ethylene-oxide terminated, propylene-oxide terminated or butylene-oxide terminated diamines. Such polyetherdiamines are for example sold under the trade name Jeffamine® and Elastamine® (Hunstman).

According to an embodiment of the present invention, the copolyamide comprises at least one aminocarboxylic acid (recurring unit z), and/or at least one lactam (recurring unit z).

The aminocarboxylic acid may have from 3 to 15 carbon atoms, for example from 4 to 13 carbon atoms. According to an embodiment, the aminocarboxylic acid is selected from the group consisting of 6-aminohexanoic acid, 9-aminononanoic acid, 10-aminodecanoic acid, 11-aminoundecanoic acid, 12-aminododecanoic acid, 13-aminotridecanoic acid and mixture thereof.

The lactam may have from 3 to 15 carbon atoms, for example from 4 to 13 carbon atoms. According to an embodiment, the lactam is selected from the group consisting of caprolactam, laurolactam dodecanolactam and mixture thereof.

According to an embodiment, the copolyamide is the condensation product of a mixture comprising :

- at least 50 mol. % of 3-(aminomethyl)benzoic acid (3-AMBa) monomers (recurring unit x) or derivative thereof,
- at least one dicarboxylic acid component and
- at least one diamine component,

wherein :

- the dicarboxylic acid component is selected from the group consisting of adipic acid, azelaic acid, sebacic acid, isophthalic acid, terephthalic acid, 2,6-naphthalene dicarboxylic acid, 4,4'-bibenzoic acid, 5-hydroxyisophthalic acid, 5-sulfophthalic acid, and mixture thereof, and
- the diamine component is selected from the group consisting of 1,4-diaminobutane, 1,5-diamonopentane, 2-methyl-1,5diaminopentane, hexamethylenediamine, 1,9-diaminononane, 2-methyl-1,8-diaminooctoane, 1,10-diaminedecane, $H_2N-(CH_2)_3-O-(CH_2)_2-O(CH_2)_3-NH_2$, *m*-xylylene diamine, p-xylylene and mixture thereof.

According to another embodiment, the copolyamide is the condensation product of a mixture comprising :

- at least 50 mol. % of 3-(aminomethyl)benzoic acid (3-AMBa) monomers (recurring unit x) or derivative thereof,
- at least one dicarboxylic acid component and
- at least one diamine component,

wherein :

- the dicarboxylic acid component is selected from the group consisting of adipic acid, terephthalic acid, isopthalic acid and mixture thereof, and
- the diamine component is selected from the group consisting of hexamethylenediamine, *m*-xylylene diamine, 1,10-decamethylene diamine and mixture thereof.

According to another embodiment, the copolyamide is the condensation product of a mixture comprising :

- at least 50 mol. % of 3-(aminomethyl)benzoic acid (3-AMBa) or derivative thereof, and
- at least one lactam selected from the group consisting of caprolactam, laurolactam, dodecanolactam and mixture thereof.

The copolyamide of the present invention comprises at least 50 mol. % of 3-(aminomethyl)benzoic acid (3-AMBa) monomers or derivative thereof.

According to another preferred embodiment, the copolyamide comprises at least 60 mol. % of 3-(aminomethyl)benzoic acid (3-AMBa) monomers or derivative thereof, for example at least 70 mol. %, at least 75 mol. % of 3-AMBa or derivative thereof. According to this embodiment, the copolyamide is such that :

$$60 \leq n_x < 100,$$

$$70 \leq n_x < 100$$

or

$$75 \leq n_x < 100.$$

The copolyamide of the present invention comprises less than 100 mol. % of 3-(aminomethyl)benzoic acid (3-AMBa) monomers or derivative thereof.

According to another preferred embodiment, the copolyamide comprises less than 99 mol. % of 3-(aminomethyl)benzoic acid (3-AMBa) monomers or derivative thereof, for example less than 98 mol. %, less than 97 mol. %, less than 96 mol. % of 3-AMBa. According to this embodiment, the copolyamide is such that :

$$50 \leq n_x < 99,$$

$$50 \leq n_x < 98,$$

$$50 \leq n_x < 97$$

or

$$50 \leq n_x < 96.$$

$n_x$, $n_y$ and $n_z$ are respectively the moles % of each recurring units x, y and z. As an example of the different embodiments of the present invention, if the copolyamide of the present invention is composed exclusively of recurring units x and y, then $n_x + n_y = 100$ and $n_z = 0$. In this case, the recurring unit y is composed of a diamine component and a diacid component; the number of moles of diamines and the number of moles of diacids to be added to the condensation reaction are equal. For example, if the copolyamide is composed exclusively of 3-AMBa, as well as terephthalic acid and hexamethylenediame, with $n_x$ = 60 mol. % and $n_y$ = 40 mol. %, then substantially the same number of moles of terephtalic acid and hexamethylenediamine should be added to the condensation mixture, that is to say 40 mol. %. The term "substantially" is hereby intended to denote that the ratio diacid/diamine varies between 0.9 to 1.1, for example between 0.95 and 1.05. According to an embodiment of the present invention, the copolyamide is amorphous, that-is-to-say that the copolyamide does not show any thermal transition other than the glass transition temperature, as measured by Differential Scanning Calorimetry at a heating rate of 10-20°C/g.

According to an embodiment, the copolyamide of the present invention has a glass transition temperature of at least about 100°C, as determined according to ASTM D3418. According to this embodiment, the copolyamide of the present invention may have for example a melting point of at least about 105°C, at least about 110°C or at least about 120°C.

According to an embodiment, the copolyamide of the present invention has a melting temperature (Tm) of at least about 280°C, as determined according to ASTM D3418. According to this embodiment, the copolyamide of the present invention may have for example a melting temperature of at least about 285°C, at least about 290°C, at least about 295°C or at least about 300°C.

According to an embodiment of the present invention, the copolyamide is semi-crystalline and is the condensation product of a mixture comprising at least 90 mol. % of 3-(aminomethyl)benzoic acid (3-AMBa), and at least one

of the component selected from the group consisting of :

- at least one dicarboxylic acid component or derivative thereof, and at least one diamine component,
- at least one aminocarboxylic acid, and/or
- at least one lactam.

According to this embodiment, the copolyamide is semi-crystalline with a high Tm, for example above 315°C or above 320°C and presents a biobased content higher than 60 % (or higher than 70 %, higher than 80 % or even higher than 90 %) according to ASTM 6866, that is to say the % of carbon atoms from renewable sources.

According to another embodiment of the present invention, the copolyamide is amorphous and is the condensation product of a mixture comprising less than 90 mol. % of 3-(aminomethyl)benzoic acid (3-AMBa), and at least one of the component selected from the group consisting of :

- at least one dicarboxylic acid component or derivative thereof, and at least one diamine component,
- at least one aminocarboxylic acid, and/or
- at least one lactam.

The copolyamide of the present invention can be prepared by any conventional method adapted to the synthesis of polyamides and polyphthalamides, for example by thermal polycondensation of aqueous solution of monomers and comonomers. The copolyamides may contain a chain limiter, which is a monofunctional molecule capable of reacting with the amine or carboxylic acid moiety, and is used to control the molecular weight of the copolyamide. For example, the chain limiter can be acetic acid, propionic acid and/or benzylamine. A catalyst can also be used. Examples of catalyst are phosphorous acid, ortho-phosphoric acid, metaphosphoric acid, alkali-metal hypophosphite such as sodium hypophosphite and phenylphosphinic acid.

<u>Polyamide composition (C)</u>

The polyamide composition (C) comprises the copolyamides of the present invention, above described.

The copolyamides may be present in the composition (C) in a total amount of greater than 30 wt. %, greater than 35 wt. % by weight, greater than 40 wt. % or greater than 45 wt. %, based on the total weight of the polymer composition (C).

The copolyamides may be present in the composition (C) in a total amount of less than 90 wt. %, less than 80 wt. %, less than 70 wt. % or less than 60 wt. %, based on the total weight of the polymer composition (C).

The copolyamides may for example be present in the composition (C) in an amount ranging between 35 and 60 wt. %, for example between 40 and 55 wt. %, based on the total weight of the polyamide composition (C).

The composition (C) may also comprise one component selected from the group consisting of reinforcing agents, tougheners, plasticizers, colorants, pigments, antistatic agents, dyes, lubricants, thermal stabilizers, light stabilizers, flame retardants, nucleating agents and antioxidants.

A large selection of reinforcing agents, also called reinforcing fibers or fillers, may be added to the composition according to the present invention. They can be selected from fibrous and particulate reinforcing agents. A fibrous reinforcing filler is considered herein to be a material having length, width and thickness, wherein the average length is significantly larger than both the width and thickness. Generally, such a material has an aspect ratio, defined as the average ratio between the length and the largest of the width and thickness of at least 5, at least 10, at least 20 or at least 50.

The reinforcing filler may be selected from mineral fillers (such as talc, mica, kaolin, calcium carbonate, calcium silicate, magnesium carbonate), glass fibers, carbon fibers, synthetic polymeric fibers, aramid fibers, aluminum fibers, titanium fibers, magnesium fibers, boron carbide fibers, rock wool fibers, steel fibers and wollastonite.

Among fibrous fillers, glass fibers are preferred; they include chopped strand A-, E-, C-, D-, S- and R-glass fibers, as described in chapter 5.2.3, p. 43-48 of Additives for Plastics Handbook, 2nd edition, John Murphy. Preferably, the filler is chosen from fibrous fillers. It is more preferably a reinforcing fiber that is able to withstand the high temperature applications.

The reinforcing agents may be present in the composition (C) in a total amount of greater than 15 wt. %, greater than 20 wt. % by weight, greater than 25 wt. % or greater than 30 wt. %, based on the total weight of the polymer composition (C). The reinforcing agents may be present in the composition (C) in a total amount of less than 65 wt. %, less than 60 wt. %, less than 55 wt. % or less than 50 wt. %, based on the total weight of the polymer composition (C).

The reinforcing filler may for example be present in the composition (C) in an amount ranging between 20 and 60 wt. %, for example between 30 and 50 wt. %, based on the total weight of the polyamide composition (C).

The composition (C) of the present invention may also comprise a toughener. A toughener is generally a low glass transition temperature ($T_g$) polymer, with a $T_g$ for example below room temperature, below 0°C or even below

-25°C. As a result of its low $T_g$, the toughener are typically elastomeric at room temperature. Tougheners can be functionalized polymer backbones.

The polymer backbone of the toughener can be selected from elastomeric backbones comprising polyethylenes and copolymers thereof, e.g. ethylene-butene; ethylene-octene; polypropylenes and copolymers thereof; polybutenes; polyisoprenes; ethylene-propylene-rubbers (EPR); ethylene-propylene-diene monomer rubbers (EPDM); ethylene-acrylate rubbers; butadiene-acrylonitrile rubbers, ethylene-acrylic acid (EAA), ethylene-vinylacetate (EVA); acrylonitrile-butadiene-styrene rubbers (ABS), block copolymers styrene ethylene butadiene styrene (SEBS); block copolymers styrene butadiene styrene (SBS); core-shell elastomers of methacrylate-butadiene-styrene (MBS) type, or mixture of one or more of the above.

When the toughener is functionalized, the functionalization of the backbone can result from the copolymerization of monomers which include the functionalization or from the grafting of the polymer backbone with a further component.

Specific examples of functionalized tougheners are notably terpolymers of ethylene, acrylic ester and glycidyl methacrylate, copolymers of ethylene and butyl ester acrylate; copolymers of ethylene, butyl ester acrylate and glycidyl methacrylate; ethylene-maleic anhydride copolymers; EPR grafted with maleic anhydride; styrene copolymers grafted with maleic anhydride; SEBS copolymers grafted with maleic anhydride; styrene-acrylonitrile copolymers grafted with maleic anhydride; ABS copolymers grafted with maleic anhydride.

The toughener may be present in the composition (C) in a total amount of greater than 1 wt. %, greater than 2 wt. % or greater than 3 wt. %, based on the total weight of the composition (C). The toughener may be present in the composition (C) in a total amount of less than 30 wt. %, less than 20 wt. %, less than 15 wt. % or less than 10 wt. %, based on the total weight of the polymer composition (C).

The composition (C) may also comprise other conventional additives commonly used in the art, including plasticizers, colorants, pigments (e.g. black pigments such as carbon black and nigrosine), antistatic agents, dyes, lubricants (e.g. linear low density polyethylene, calcium or magnesium stearate or sodium montanate), thermal stabilizers, light stabilizers, flame retardants, nucleating agents and antioxidants.

The composition (C) may also comprise one or more other polymers, preferably copolyamides different from the copolyamide of the present invention. Mention can be made notably of semi-crystalline or amorphous polyamides, such as aliphatic polyamides, semi-aromatic polyamides, and more generally the polyamides obtained by polycondensation between an aromatic or aliphatic saturated diacid and an aliphatic saturated or aromatic primary diamine, a lactam, an amino-acid or a mixture of these different monomers.

## Preparation of the polyamide composition (C)

The invention further pertains to a method of making the composition (C) as above detailed, said method comprising melt-blending the copolyamide and the specific components, e.g. a filler, a toughener, a stabilizer, and of any other optional additives.

Any melt-blending method may be used for mixing polymeric ingredients and non-polymeric ingredients in the context of the present invention. For example, polymeric ingredients and non-polymeric ingredients may be fed into a melt mixer, such as single screw extruder or twin screw extruder, agitator, single screw or twin screw kneader, or Banbury mixer, and the addition step may be addition of all ingredients at once or gradual addition in batches. When the polymeric ingredient and non-polymeric ingredient are gradually added in batches, a part of the polymeric ingredients and/or non-polymeric ingredients is first added, and then is melt-mixed with the remaining polymeric ingredients and non-polymeric ingredients that are subsequently added, until an adequately mixed composition is obtained. If a reinforcing agent presents a long physical shape (for example, a long glass fiber), drawing extrusion molding may be used to prepare a reinforced composition.

## Articles and applications

The present invention also relates to articles comprising the copolyamide described above and to articles comprising the copolyamide composition (C) described above.

The article can notably be used in automotive applications, for example in air induction systems, cooling and heating systems, drivetrain systems and fuel systems. The article can also be used in LED packaging, mobile electronics, oil and gas applications and plumbing. Examples of electric and electronics devices are connectors, contactors and switches. The copolyamide may also be used as a gas barrier material for packaging applications, in mono or multilayer articles.

The article can be molded from the copolyamide or copolyamide composition (C) of the present invention, by any process adapted to thermoplastics, e.g. extrusion, injection molding, blow molding, rotomolding or compression molding.

The article can be printed from the copolyamide or copolyamide composition (C) of the present invention, by

a process comprising a step of extrusion of the material, which is for example in the form of a filament, or comprising a step of laser sintering of the material, which is in this case in the form of a powder.

The present invention also relates to a method for manufacturing a three-dimensional (3D) object with an additive manufacturing system, comprising :

- providing a part material comprising the copolyamide or copolyaide composition (C) of the present invention, and
- printing layers of the three-dimensional object from the part material.

The copolyamide or copolyamide composition (C) can therefore be in the form of a thread or a filament to be used in a process of 3D printing, e.g. Fused Filament Fabrication, also known as Fused Deposition Modelling (FDM).

The copolyamide or copolyamide composition (C) can also be in the form of a powder, for example a substantially spherical powder, to be used in a process of 3D printing, e.g. Selective Laser Sintering (SLS).

Use of the copolyamides, composition (C) and articles

The present invention relates to the use of the above-described copolyamides, composition (C) or articles in air induction systems, cooling and heating systems, drivetrain systems and fuel systems or in in mobile electronics, for example in a mobile electronic device.

The present invention also relates to the use of the above-described copolyamides or composition (C) for 3D printing an object.

Examples

**Raw materials**

3-AMBa : 3-(aminomethyl)benzoic acid monomers, obtained by the process described in co-pending patent application filed under number PCT/CN2016/108997 on December 8, 2016, from biobased furfural derivatives (5 carbon atoms over 8 carbon atoms are from biobased sources).

Caprolactam (TCI, Tokyo Chemical Industry Co., LTD)
Terephthalic acid (Flint Hills Resources)
Adipic acid (Invista)
Hexamethylenediamine (Invista)
*m*-xylylenediamine (Mitsubishi Gas Chemical America, Inc.)

**Copolyamides preparation**

All of the copolyamides were prepared according to a similar process in an electrically-heated autoclave reactor equipped with a distillate line fitted with a pressure regulation valve. In the preparation of example 1, the reactor was charged with 3.186 g (21.1 mmol) of 3-AMBa, 0.1936 g (1.7 mmol) of caprolactam and 1 g of deionized water. The reactor was sealed, the pressure release valve was set to 17 bar and the reaction mixture was heated to 285°C. The pressure was reduced to atmospheric and the temperature was increased to 300°C. The reaction mixture was kept at 300°C for 15 min and then cooled down to 200°C within 1 hour and then to room temperature. The obtained products were further polymerized for 4 hours at 210°C. In the preparation of example 10, 0.257 mol 3-AMBa, 0.064 mol isophthalic acid, 0.067 mol hexamethylenediamine, 50 g water and 0.048 mmol phosphorous acid were reacted in an autoclave reactor equipped with an agitator. Following pressure reduction to atmospheric steam pressure, the reaction mixture was held at 300°C for 20 minutes followed by introduction and release of nitrogen pressure and continued heating at 300°C for 30 minutes.

**Testing**

Thermal transitions (Tg, Tm)

The glass transition and melting temperatures of the various copolyamides were measured using differential scanning calorimetry according to ASTM D3418 employing a heating and cooling rate of 10°C/min. Three scans were used for each DSC test: a first heat up to 340°C, followed by a first cool down to 30°C, followed by a second heat up to 350°C. The Tg and the Tm were determined from the second heat up. The glass transition and melting temperatures are tabulated in Tables 1 and 3 (invention) and Table 2 (comparative) below.

Table 1 - mol. %

| | Ex 1 | Ex 2 | Ex 3 | Ex 4 | Ex 5 | Ex 6 | Ex 7 |
|---|---|---|---|---|---|---|---|
| 3-AMBa | 92.5 | 95 | 90 | 85 | 75 | 75 | 95 |
| Caprolactam | 7.5 | - | - | - | - | - | - |
| Adipic acid | - | - | - | - | - | 25 | 5 |
| Terephthalic acid | - | 5 | 10 | 15 | 25 | - | - |
| Hexamethylenediamine | - | 5 | 10 | 15 | 25 | 25 | - |
| m-Xylylenediamine | - | - | - | - | - | - | 5 |
| | Glass Transition and Melting Temperatures | | | | | | |
| Tg (°C) | 145 | 149 | 151 | 155 | 158 | 118 | 152 |
| Tm (°C) | 319 | 326 | - | - | - | - | 324 |

Table 2 - Mol %

| | Ex8C | Ex9C |
|---|---|---|
| 3-AMBa | - | - |
| Isophthalic acid | - | 30 |
| Adipic acid | 35 | - |
| Terephthalic acid | 65 | 70 |
| Hexamethylenediamine | 100 | 100 |
| m-Xylylenediamine | - | - |
| Tg/Tm | | |
| Tg (°C) | 88 | 125 |
| Tm (°C) | 325 | 319 |

The number average molecular weight (Mn) of polymer product of Example 10 was measured by gel permeation chromatography (GPC), using hexafluoroisopropanol (HFIP) with 0.05 M NaFTA as a mobile phase. Two PL HFIP gel columns with a guard column were used for the separation. An ultraviolet detector of 237 nm was used to obtain the chromatogram. A flow rate of 0.25 ml/min and injection volume of 15 $\mu$L of a 0.5 w/v% solution in mobile phase was selected. Calibration was performed with a broad molecular weight polyterephthalamide reference polymer, 6T/6I/66 65/25/10 of Mw 27900 as determined by light scattering and Mn of 9340 as determined by chemical characterization. The number average molecular weight (Mn) was reported.

Tensile strength and modulus polymer product of Example 10 were determined according to the ASTM D638 method with Type V bars.

Table 3 - Mol %

| | Ex10 |
|---|---|
| 3-AMBa | 80 |
| Isophthalic acid | 10 |
| Hexamethylenediamine | 10 |
| Tg, Mn and mechanical properties | |
| Tg (°C) | 158 |
| Mn by GPC (amu) | 15,400 |

(continued)

| Tg, Mn and mechanical properties | |
|---|---|
| Tensile Strength at Break (MPa) | 107 |
| Modulus of Elasticity (GPa) | 4.48 |

All of the above-prepared copolyamides present a high biobased content and a Tg above 115°C. The copolyamides of Examples 1, 2 and 7 are semi-crystalline and present a Tm above 315°C with a molar content of biobased monomers higher than 90 mol. %. Compared to usual polyphthalamides structures of comparative examples Ex8C and Ex9C, the semi-crystalline copolyamide of the invention exhibit a similar melting point but present the advantage that they have a higher glass transition temperature, making them for example well-suited for under-the-hood applications in automotive, where the stiffness should be stay high at operating temperatures above 140°C. The copolyamides of examples 3-6, with a biobased monomer content varying between 75 mol. % and 90 mol. %, are amorphous and transparent, and have a high Tg, making then well-suited for applications such as glasses and sunglasses frames or transparent containers for packaging.

## Claims

**1.** A copolyamide, having the following formula (I) :

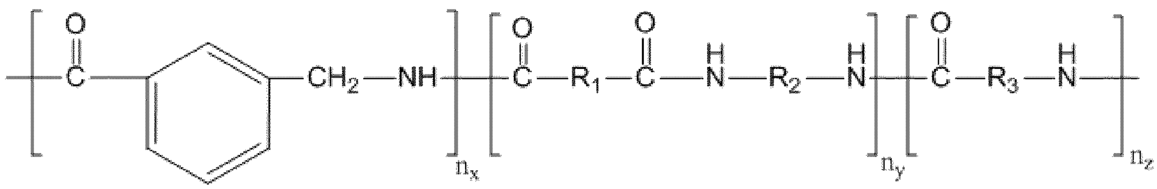

(I)

wherein :

$n_x$, $n_y$ and $n_z$ are respectively the moles % of each recurring units x, y and z;
recurring units x, y and z are arranged in blocks, in alternation or randomly;

$$n_x + n_y + n_z = 100;$$

$$50 \leq n_x < 100;$$

$R_1$ is selected from the group consisting of a bond, a $C_1$-$C_{15}$ alkyl and a $C_6$-$C_{30}$ aryl, optionally comprising one or more heteroatoms and optionally substituted with one or more substituents selected from the group consisting of halogen, hydroxy, $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl;
$R_2$ is selected from the group consisting of a $C_1$-$C_{20}$ alkyl and a $C_6$-$C_{30}$ aryl, optionally comprising one or more heteroatoms and optionally substituted with one or more substituents selected from the group consisting of halogen, hydroxy, $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl; and
$R_3$ is selected from the group consisting of a linear or branched $C_2$-$C_{14}$ alkyl, possibly comprising one or more heterotaoms and possibly substituted with one or more substituent selected from the group consisting of halogen, hydroxy, $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl.

**2.** The copolyamide of claim 1, wherein

$R_1$ is selected from the group consisting of a $C_4$-$C_{10}$ alkyl and a $C_6$-$C_{12}$ aryl, optionally substituted with one or more substituents selected from the group consisting of halogen, hydroxy, $C_1$-$C_6$ alkoxy, $C_1$-$C_6$ alkylthio, $C_1$-$C_6$ acyl, formyl, cyano, $C_6$-$C_{15}$ aryloxy and $C_6$-$C_{15}$ aryl,

$R_2$ is selected from the group consisting of a $C_4$-$C_{12}$ alkyl and a $C_6$-$C_{12}$ aryl, optionally comprising one or more heteroatoms, and/or
$R_3$ is selected from the group consisting of a linear or branched $C_3$-$C_{13}$ alkyl.

**3.** The copolyamide of claim 1 or 2, wherein the copolyamide is the condensation product of a mixture comprising at least 50 mol. % of 3-(aminomethyl)benzoic acid (3-AMBa) or derivative thereof, and at least one of the component selected from the group consisting of :

- at least one dicarboxylic acid component or derivative thereof, and at least one diamine component,
- at least one aminocarboxylic acid and
- at least one lactam.

**4.** The copolyamide of any one of claims 1-3, wherein the copolyamide is the condensation product of a mixture comprising :

- at least 50 mol. % of 3-(aminomethyl)benzoic acid (3-AMBa) or derivative thereof,
- a dicarboxylic acid component selected from the group consisting of adipic acid, azelaic acid, sebacic acid, isophthalic acid, terephthalic acid, 2,6-naphthalene dicarboxylic acid, 4,4'-bibenzoic acid, 5-hydroxyisophthalic acid, 5-sulfophthalic acid, and mixture thereof, and
- a diamine component selected from the group consisting of 1,4-diaminobutane, 1,5-diamonopentane, 2-methyl-1,5diaminopentane, hexamethylenediamine, 1,9-diaminononane, 2-methyl-1,8-diaminooctoane, 1,10-diamine-decane, $H_2N$-$(CH_2)_3$-O-$(CH_2)_2$-O$(CH_2)_3$-$NH_2$, *m*-xylylene diamine, p-xylylene and mixture thereof.

**5.** The copolyamide of any one of claims 1-4, wherein the copolyamide is the condensation product of a mixture comprising :

- at least 50 mol. % of 3-(aminomethyl)benzoic acid (3-AMBa) or derivative thereof,
- a dicarboxylic acid component selected from the group consisting of adipic acid, sebacic acid, terephthalic acid, isopthalic acid and mixture thereof, and
- a diamine component selected from the group consisting of hexamethylenediamine, *m*-xylylene diamine, 1,10-decamethylene diamine and mixture thereof.

**6.** The copolyamide of any one of claims 1-3, wherein the copolyamide is the condensation product of a mixture comprising :

- at least 50 mol. % of 3-(aminomethyl)benzoic acid (3-AMBa) or derivative thereof, and
- at least one lactam selected from the group consisting of caprolactam, dodecanolactam, laurolactam and mixture thereof.

**7.** The copolyamide of any one of the preceding claims, wherein the copolyamide is such that : $60 \leq n_x < 100$, preferably $70 \leq n_x < 100$.

**8.** The copolyamide of any one of the preceding claims, wherein the copolyamide has a glass transition temperature of at least 100° C, as determined according to ASTM D3418.

**9.** The copolyamide of claim 1 or 8, wherein the copolyamide is semi-crystalline and is the condensation product of a mixture comprising at least 90 mol. % of 3-(aminomethyl)benzoic acid (3-AMBa), and at least one of the component selected from the group consisting of :

- at least one dicarboxylic acid component or derivative thereof, and at least one diamine component,
- at least one aminocarboxylic acid, and/or
- at least one lactam.

**10.** The copolyamide of claim 9, wherein the copolyamide is semi-crystalline and has a melting temperature Tm above 315° C and a biobased content higher than 60 % as determined according to ASTM 6866, the biobased content representing the % of carbon atoms from renewable sources.

**11.** A copolyamide composition (C), comprising :

- at least one copolyamide according to any one of claims 1-10,
- at one least one of components selected from the group consisting of reinforcing agents, tougheners, plasticizers, colorants, pigments, antistatic agents, dyes, lubricants, thermal stabilizers, light stabilizers, flame retardants, nucleating agents and antioxidants.

**12.** An article comprising the copolyamide of any one of claims 1-10 or the composition (C) of claim 11.

**13.** Use of the article of claim 12 in air induction systems, cooling and heating systems, drivetrain systems and fuel systems.

**14.** Use of the article of claim 12 in mobile electronics, for example in a mobile electronic device.

**15.** A method for manufacturing a three-dimensional (3D) object with an additive manufacturing system, comprising :

- providing a part material comprising the copolyamide of any one of claims 1-10 or the composition (C) of claim 11, and
- printing layers of the three-dimensional object from the part material.

## Patentansprüche

**1.** Copolyamid mit der folgenden Formel (I):

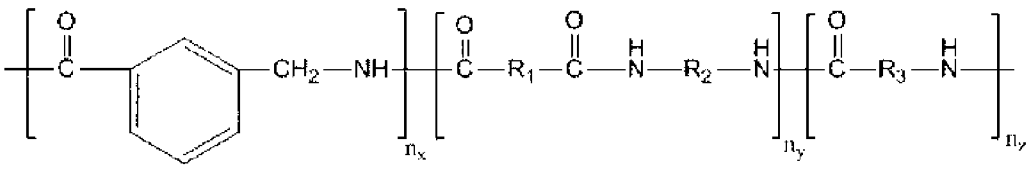

(I)

wobei:

$n_x$, $n_y$ und $n_z$ jeweils die Mol.% von jeder der sich wiederholenden Einheiten x, y und z sind;
die sich wiederholenden Einheiten x, y und z in Blöcken alternierend oder statistisch angeordnet sind;
$n_x + n_y + n_z = 100$;
$50 \leq n_x < 100$;
$R_1$ ausgewählt ist aus der Gruppe bestehend aus einer Bindung, einem $C_1$-$C_{15}$-Alkyl und einem $C_6$-$C_{30}$-Aryl, gegebenenfalls umfassend ein oder mehrere Heteroatome und gegebenenfalls substituiert mit einem oder mehreren Substituenten ausgewählt aus der Gruppe bestehend aus Halogen, Hydroxy, $C_1$-$C_6$-Alkoxy, $C_1$-$C_6$-Alkylthio, $C_1$-$C_6$-Acyl, Formyl, Cyano, $C_6$-$C_{15}$-Aryloxy und $C_6$-$C_{15}$-Aryl;
$R_2$ ausgewählt ist aus der Gruppe bestehend aus einem $C_1$-$C_{20}$-Alkyl und einem $C_6$-$C_{30}$-Aryl, gegebenenfalls umfassend ein oder mehrere Heteroatome und gegebenenfalls substituiert mit einem oder mehreren Substituenten ausgewählt aus der Gruppe bestehend aus Halogen, Hydroxy, $C_1$-$C_6$-Alkoxy, $C_1$-$C_6$-Alkylthio, $C_1$-$C_6$-Acyl, Formyl, Cyano, $C_6$-$C_{15}$-Aryloxy und $C_6$-$C_{15}$-Aryl; und
$R_3$ ausgewählt ist aus der Gruppe bestehend aus einem linearen oder verzweigten $C_2$-$C_{14}$-Alkyl, möglicherweise umfassend ein oder mehrere Heteroatome und möglicherweise substituiert mit einem oder mehreren Substituenten ausgewählt aus der Gruppe bestehend aus Halogen, Hydroxy, $C_1$-$C_6$-Alkoxy, $C_1$-$C_6$-Alkylthio, $C_1$-$C_6$-Acyl, Formyl, Cyano, $C_6$-$C_{15}$-Aryloxy und $C_6$-$C_{15}$-Aryl.

**2.** Copolyamid nach Anspruch 1, wobei

$R_1$ ausgewählt ist aus der Gruppe bestehend aus einem $C_4C_{10}$-Alkyl und einem $C_6$-$C_{12}$-Aryl, gegebenenfalls substituiert mit einem oder mehreren Substituenten ausgewählt aus der Gruppe bestehend aus Halogen, Hydroxy, $C_1$-$C_6$-Alkoxy, $C_1$-$C_6$-Alkylthio, $C_1$-$C_6$-Acyl, Formyl, Cyano, $C_6$-$C_{15}$-Aryloxy und $C_6$-$C_{15}$-Aryl;
$R_2$ ausgewählt ist aus der Gruppe bestehend aus einem $C_4$-$C_{12}$-Alkyl und einem $C_6$-$C_{12}$-Aryl, gegebenenfalls umfassend ein oder mehrere Heteroatome, und/oder

$R_3$ ausgewählt ist aus der Gruppe bestehend aus einem linearen oder verzweigten $C_3$-$C_{13}$-Alkyl.

**3.** Copolyamid nach Anspruch 1 oder 2, wobei das Copolyamid das Kondensationsprodukt einer Mischung ist, umfassend mindestens 50 Mol.% 3-(Aminomethyl)-benzoesäure (3-AMBa) oder ein Derivat davon und mindestens eine der Komponenten ausgewählt aus der Gruppe bestehend aus:

- mindestens einer Dicarbonsäurekomponente oder einem Derivat davon, und mindestens einer Diaminkomponente,
- mindestens einer Aminocarbonsäure und
- mindestens einem Lactam.

**4.** Copolyamid nach einem der Ansprüche 1 bis 3, wobei das Copolyamid das Kondensationsprodukt einer Mischung ist, umfassend:

- mindestens 50 Mol.% 3-(Aminomethyl)benzoesäure (3-AMBa) oder ein Derivat davon,
- eine Dicarbonsäurekomponente ausgewählt aus der Gruppe bestehend aus Adipinsäure, Azelainsäure, Sebacinsäure, Isophthalsäure, Terephthalsäure, 2,6-Naphthalindicarbonsäure, 4,4'-Bibenzoesäure, 5-Hydroxyisophthalsäure, 5-Sulfophthalsäure und Mischungen davon, und
- eine Diaminkomponente ausgewählt aus der Gruppe bestehend aus 1,4-Diaminobutan, 1,5-Diaminopentan, 2-Methyl-1,5-diaminopentan, Hexamethylendiamin, 1,9-Diaminononan, 2-Methyl-1,8-diaminooctan, 1,10-Diamindecan, $H_2N$-$(CH_2)_3$-O-$(CH_2)_2$-O$(CH_2)_3$-$NH_2$, m-Xylylendiamin, p-Xylylen und Mischungen davon.

**5.** Copolyamid nach einem der Ansprüche 1 bis 4, wobei das Copolyamid das Kondensationsprodukt einer Mischung ist, umfassend:

- mindestens 50 Mol.% 3-(Aminomethyl)benzoesäure (3-AMBa) oder ein Derivat davon,
- eine Dicarbonsäurekomponente ausgewählt aus der Gruppe bestehend aus Adipinsäure, Sebacinsäure, Terephthalsäure, Isophthalsäure und Mischung davon, und
- eine Diaminkomponente ausgewählt aus der Gruppe bestehend aus Hexamethylendiamin, m-Xylylendiamin, 1,10-Decamethylendiamin und Mischung davon.

**6.** Copolyamid nach einem der Ansprüche 1 bis 3, wobei das Copolyamid das Kondensationsprodukt einer Mischung ist, umfassend:

- mindestens 50 Mol.% 3-(Aminomethyl)benzoesäure (3-AMBa) oder ein Derivat davon, und
- mindestens ein Lactam ausgewählt aus der Gruppe bestehend aus Caprolactam, Dodecanolactam, Laurolactam und Mischungen davon.

**7.** Copolyamid nach einem der vorhergehenden Ansprüche, wobei das Copolymamid so ist, dass $60 \leq n_x < 100$, vorzugsweise $70 \leq n_x < 100$.

**8.** Copolyamid nach einem der vorhergehenden Ansprüche, wobei das Copolyamid eine Glasübergangstemperatur von mindestens 100 °C aufweist, ermittelt gemäß ASTM D3418.

**9.** Copolyamid nach Anspruch 1 oder 8, wobei das Copolyamid semikristallin ist und das Kondensationsprodukt einer Mischung ist, umfassend mindestens 90 Mol. % 3-(Aminomethyl)benzoesäure (3-AMBa) und mindestens eine der Komponenten ausgewählt aus der Gruppe bestehend aus:

- mindestens einer Dicarbonsäurekomponente oder einem Derivat davon, und mindestens einer Diaminkomponente,
- mindestens einer Aminocarbonsäure und/oder
- mindestens einem Lactam.

**10.** Copolyamid nach Anspruch 9, wobei das Copolyamid semikristallin ist und eine Schmelztemperatur Tm über 315 °C und einen Gehalt an biobasiertem Material höher als 60 % hat, bestimmt gemäß ASTM 6866, wobei der Gehalt an biobasiertem Material die % der Kohlenstoffatome aus erneuerbaren Quellen wiedergibt.

**11.** Copolyamidzusammensetzung (C), umfassend:

- mindestens ein Copolyamid gemäß einem der Ansprüche 1 bis 10,
- mindestens eine der Komponenten ausgewählt aus der Gruppe bestehend aus Verstärkungsmitteln Zähmachern, Weichmachern, Färbungsmitteln, Pigmenten, Antistatikmitteln, Farbstoffen, Schmiermitteln, Wärmestabilisatoren, Lichtstabilisatoren, Flammhemmern, Kristallkeimbildnern und Antioxidantien.

**12.** Artikel, umfassend das Copolyamid gemäß einem der Ansprüche 1 bis 10 oder die Zusammensetzung (C) gemäß Anspruch 11.

**13.** Verwendung des Artikels nach Anspruch 12 in Luftinduktionssystemen, Kühl- und Heizsystemen, Antriebstechniksystemen und Brennstoffsystemen.

**14.** Verwendung des Artikels nach Anspruch 12 in Mobilelektronik, beispielsweise in einem mobilen elektronischen Gerät.

**15.** Verfahren zur Fertigung eines dreidimensionalen (3D) Objekts mit einem additiven Fertigungssystem, umfassend:

- Bereitstellen eines Teilematerials, welches das Copolyamid gemäß einem der Ansprüche 1 bis 10 oder die Zusammensetzung (C) gemäß Anspruch 11 umfasst, und
- Drucken von Schichten des dreidimensionalen Objekts aus dem Teilematerial.

## Revendications

**1.** Copolyamide, ayant la formule (I) suivante :

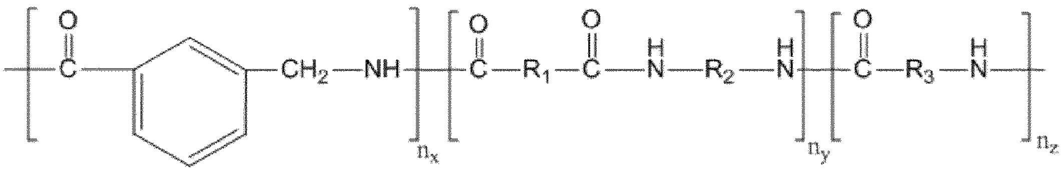

(I)

dans laquelle :

$n_x$, $n_y$ et $n_z$ sont respectivement les % en moles de chacun des motifs récurrents x, y et z ;
les motifs récurrents x, y et z sont agencés en blocs, de façon alternée ou aléatoire ;

$$n_x + n_y + n_z = 100 ;$$

$$50 \leq n_x < 100 ;$$

$R_x$ est choisi dans le groupe constitué d'une liaison, un alkyle en $C_1$-$C_{15}$ et un aryle en $C_6$-$C_{30}$, comprenant éventuellement un ou plusieurs hétéroatomes et éventuellement substitué par un ou plusieurs substituants choisis dans le groupe constitué d'halogène, hydroxy, alcoxy en $C_1$-$C_6$, alkylthio en en $C_1$-$C_6$, acyle en $C_1$-$C_6$, formyle, cyano, aryloxy en $C_6$-$C_{15}$ et aryle en $C_6$-$C_{15}$;
$R_2$ est choisi dans le groupe constitué d'alkyle en $C_1$-$C_{20}$ et aryle en $C_6$-$C_{30}$, comprenant éventuellement un ou plusieurs hétéroatomes et éventuellement substitué par un ou plusieurs substituants choisis dans le groupe constitué d'halogène, hydroxy, alcoxy en $C_1$-$C_6$, alkylthio en en $C_1$-$C_6$, acyle en $C_1$-$C_6$, formyle, cyano, aryloxy en $C_6$-$C_{15}$ et aryle en $C_6$-$C_{15}$ ; et
$R_3$ est choisi dans le groupe constitué d'alkyle en $C_2$-$C_{14}$ linéaire ou ramifié, comprenant éventuellement un ou plusieurs hétéroatomes et éventuellement substitué par un ou plusieurs substituants choisis dans le groupe constitué d'halogène, hydroxy, alcoxy en $C_1$-$C_6$, alkylthio en $C_1$-$C_6$, acyle en $C_1$-$C_6$, formyle, cyano, aryloxy en $C_6$-$C_{15}$ et aryle en $C_6$-$C_{15}$.

**2.** Copolyamide selon la revendication 1, dans lequel

$R_2$ est choisi dans le groupe constitué d'alkyle en $C_4$-$C_{10}$ et aryle en $C_6$-$C_{12}$, éventuellement substitué par un ou plusieurs substituants choisis dans le groupe constitué d'halogène, hydroxy, alcoxy en $C_1$-$C_6$, alkylthio en en $C_1$-$C_6$, acyle en $C_1$-$C_6$, formyle, cyano, aryloxy en $C_6$-$C_{15}$ et aryle en $C_6$-$C_{15}$,
$R_2$ est choisi dans le groupe constitué d'alkyle en $C_4$-$C_{12}$ et aryle en $C_6$-$C_{12}$, comprenant éventuellement un ou plusieurs hétéroatomes, et/ou
$R_3$ est choisi dans le groupe constitué d'alkyle en $C_3$-$C_{13}$ linéaire ou ramifié.

**3.** Copolyamide selon la revendication 1 ou 2, le copolyamide étant le produit de condensation d'un mélange comprenant au moins 50 % en moles d'acide 3-(aminométhyl)benzoïque (3-AMBa) ou un dérivé de celui-ci, et au moins un des composants choisis dans le groupe constitué de :

- au moins un composant acide dicarboxylique ou un dérivé de celui-ci, et au moins un composant diamine,
- au moins un acide aminocarboxylique et
- au moins un lactame.

**4.** Copolyamide selon l'une quelconque des revendications 1 à 3, le copolyamide étant le produit de condensation d'un mélange comprenant :

- au moins 50 % en moles d'acide 3-(aminométhyl)benzoïque (3-AMBa) ou un dérivé de celui-ci,
- un composant acide dicarboxylique choisi dans le groupe constitué de l'acide adipique, l'acide azélaïque, l'acide sébacique, l'acide isophtalique, l'acide téréphtalique, l'acide 2,6-naphtalènedicarboxylique, l'acide 4,4'-dibenzoïque, l'acide 5-hydroxyisophtalique, l'acide 5-sulfophtalique, et un mélange de ceux-ci, et
- un composant diamine choisi dans le groupe constitué du 1,4-diaminobutane, du 1,5-diamonopentane, du 2-méthyl-1,5-diaminopentane, de l'hexaméthylènediamine, du 1,9-diaminononane, du 2-méthyl-1,8-diaminooctoane, du 1,10-diaminedécane, de $H_2N-(CH_2)_3-O-(CH_2)_2-O(CH_2)_3-NH_2$, de la m-xylylènediamine, du p-xylylène et un mélange de ceux-ci.

**5.** Copolyamide selon l'une quelconque des revendications 1 à 4, le copolyamide étant le produit de condensation d'un mélange comprenant :

- au moins 50 % en moles d'acide 3-(aminométhyl)benzoïque (3-AMBa) ou un dérivé de celui-ci,
- un composant acide dicarboxylique choisi dans le groupe constitué de l'acide adipique, l'acide sébacique, l'acide téréphtalique, l'acide isopthalique et un mélange de ceux-ci, et
- un composant diamine choisi dans le groupe constitué de l'hexaméthylènediamine, la m-xylylènediamine, la 1,10-décaméthylènediamine et un mélange de celles-ci.

**6.** Copolyamide selon l'une quelconque des revendications 1 à 3, le copolyamide étant le produit de condensation d'un mélange comprenant :

- au moins 50 % en moles d'acide 3-(aminométhyl)benzoïque (3-AMBa) ou un dérivé de celui-ci, et
- au moins un lactame choisi dans le groupe constitué du caprolactame, du dodécanolactame, du laurolactame et un mélange de ceux-ci.

**7.** Copolyamide selon l'une quelconque des revendications précédentes, le copolyamide étant tel que : $60 \leq n_x < 100$, de préférence $70 \leq n_x < 100$.

**8.** Copolyamide selon l'une quelconque des revendications précédentes, le copolyamide ayant une température de transition vitreuse d'au moins 100 °C, comme déterminé selon ASTM D3418.

**9.** Copolyamide selon la revendication 1 ou 8, le copolyamide étant semi-cristallin et étant le produit de condensation d'un mélange comprenant au moins 90 % en moles d'acide 3-(aminométhyl)benzoïque (3-AMBa), et au moins un des composants choisis dans le groupe constitué de :

- au moins un composant acide dicarboxylique ou un dérivé de celui-ci, et au moins un composant diamine,
- au moins un acide aminocarboxylique, et/ou
- au moins un lactame.

**10.** Copolyamide selon la revendication 9, le copolyamide étant semi-cristallin et ayant une température de fusion Tm

supérieure à 315 °C et une teneur en composant biosourcé supérieure à 60 % comme déterminé selon ASTM 6866, la teneur en composant biosourcé représentant le % d'atomes de carbone provenant de sources renouvelables.

**11.** Composition de copolyamide (C), comprenant :

- au moins un copolyamide selon l'une quelconque des revendications 1 à 10,
- au moins l'un des composants choisis dans le groupe constitué d'agents de renforcement, durcisseurs, plastifiants, colorants, pigments, agents antistatiques, colorants, lubrifiants, stabilisants thermiques, stabilisants à la lumière, agents ignifugeants, agents de nucléation et antioxydants.

**12.** Article comprenant le copolyamide selon l'une quelconque des revendications 1 à 10 ou la composition (C) selon la revendication 11.

**13.** Utilisation de l'article selon la revendication 12 dans des systèmes d'induction d'air, des systèmes de refroidissement et de chauffage, des systèmes de transmission et des systèmes de carburant.

**14.** Utilisation de l'article selon la revendication 12 en électronique mobile, par exemple dans un dispositif électronique mobile.

**15.** Procédé de fabrication d'un objet tridimensionnel (3D) avec un système de fabrication additive, comprenant :

- la fourniture d'un matériau de composant comprenant le copolyamide selon l'une quelconque des revendications 1 à 10 ou la composition (C) selon la revendication 11, et
- l'impression de couches de l'objet tridimensionnel à partir du matériau de composant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 2016108997 W
- JP H0967517 A
- US 3438948 A
- JP 2003175543 A
- CN 2016108997

### Non-patent literature cited in the description

- **JOHN MURPHY.** Additives for Plastics Handbook. 43-48